# EUROPÄISCHE PATENTANMELDUNG

(11) **EP 4 236 398 A1**
(43) Veröffentlichungstag der Anmeldung: **30.08.2023**
(21) Anmeldenummer: 22168189.3
(22) Anmeldetag: 13.04.2022
(51) Int. Cl.: H04W 4/48, H04W 4/70

(54) **NETZWERKAGENT ZUR EINBINDUNG IN EIN MULTIAGENTENNETZWERK, VERFAHREN ZUM DATENAUSTAUSCH ZWISCHEN KOMPONENTEN EINES NETZWERKAGENTEN UND MULTIAGENTENNETZWERK**

(30) Priorität: 28.02.2022 DE 102022202024
(71) Anmelder: Siemens Aktiengesellschaft, 80333 München (DE)
(72) Erfinder: Hohl, Hubertus, 79219 Staufen (DE); Sauer, Markus, 81739 München (DE)
(74) Vertreter: Siemens Patent Attorneys

(57) **Zusammenfassung**

Der Netzwerkagent ist zur Einbindung in ein Multiagentennetzwerk (CN) ausgebildet, wobei der Netzwerkagent (AG) zwei oder mehr Komponenten (AC) sowie ein Interaktionsmodul (IM) aufweist und wobei das Interaktionsmodul (IM) mit den zwei oder mehr Komponenten (AC) signalverbunden und eingerichtet ist, Publish-Subscribe-Nachrichten (NABL, NABS, NABLS) zwischen den zwei oder mehr Komponenten (AC) zu übertragen.

## Beschreibung

Die Erfindung betrifft einen Netzwerkagenten zur Einbindung in ein Multiagentennetzwerk sowie ein Verfahren zum Datenaustausch zwischen Komponenten eines Netzwerkagenten und ein Multiagentennetzwerk.

Es sind dezentral organisierte IoT-Systeme bekannt, in denen autonome oder zumindest teilautonome und lose gekoppelte Systemteilnehmer über ein datenzentrisches Kommunikationsverfahren Daten austauschen. Solche datenzentrischen Kommunikationsverfahren genügen etwa den Standards MQTT oder DDS (Data Distribution Service).

Ein typisches Anwendungsbeispiel im industriellen Umfeld sind autonome Netzwerkagenten, die kollaborativ in einem Multiagentennetzwerk zusammenarbeiten, um Arbeitsaufgaben, z.B. Transport- oder Fertigungsaufgaben, dezentral, ad hoc, bedarfsgetrieben, kontextabhängig und effizient ausführen zu können.

Diese autonomen Netzwerkagenten können mittels datenzentrischer Kommunikationsverfahren miteinander Daten austauschen.

Gleichwohl sind solche Multiagentennetzwerke mitunter komplex einzurichten, zu warten und zu administrieren.

Es ist daher Aufgabe der Erfindung, verbesserte Netzwerkagenten zur Einbindung in ein Multiagentennetzwerk anzugeben, mittels welchen insbesondere verbessert Multiagentennetzwerke realisiert werden können. Vorzugsweise sollen Einbindung und/oder Einrichtung und/oder Wartung und/oder Verwaltung der Netzwerkagenten in Multiagentennetzwerken erleichtert sein. Ferner ist es Aufgabe der Erfindung, ein verbessertes Verfahren zum Datenaustausch zwischen Komponenten eines Netzwerkagenten sowie ein verbessertes Multiagentennetzwerk anzugeben.

Diese Aufgabe der Erfindung wird mit einem Netzwerkagenten mit den in Anspruch 1 angegebenen Merkmalen, mit einem Verfahren zum Datenaustausch von Komponenten eines Netzwerkagenten mit den in Anspruch 11 angegebenen Merkmalen sowie mit einem Multiagentennetzwerk mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Der erfindungsgemäße Netzwerkagent ist zur Einbindung in ein Multiagentennetzwerk ausgebildet. Dabei weist der erfindungsgemäße Netzwerkagent zwei oder mehr Komponenten sowie ein Interaktionsmodul auf, wobei das Interaktionsmodul mit den zwei oder mehr Komponenten signalverbunden ist und eingerichtet ist, Publish-Subscribe-Nachrichten zwischen den zwei oder mehr Komponenten zu übertragen.

Bei dem erfindungsgemäßen Netzwerkagenten wird nicht allein die Kommunikation von Netzwerkagenten untereinander mittels Publish-Subscribe-Nachrichten ermöglicht, sondern der erfindungsgemäße Netzwerkagent erlaubt vorteilhaft auch eine Kommunikation von Komponenten des Netzwerkagenten miteinander mittels Publish-Subscribe-Verfahren. Die Kommunikation von Komponenten des Netzwerkagenten mittels Publish-Subscribe-Verfahren hat den Vorteil, dass sich miteinander interagierende Komponenten eines Netzwerkagenten nicht zwingend kennen müssen, d.h. kein Wissen über die Endpunkte der übrigen Komponenten, insbesondere keine Kenntnis der IP-Adressen und Ports der Komponenten, vorhalten müssen.

Folglich müssen Komponenten eines erfindungsgemäßen Netzwerkagenten miteinander nicht direkt mittels einer Signalverbindung in der Art einer Eins-zu-eins-Kopplung verbunden werden, wobei jeder Komponente aufwendig Informationen über aller lokalen Komponenten, mit denen eine Eins-zu-eins-Kopplung aufgebaut werden soll, zur Verfügung gestellt werden müssten. Diese Eins-zu-eins-Kopplungen müssten zudem wie aus dem Stand der Technik bekannt aufwendig verwaltet werden.

Erfindungsgemäß können hingegen die Vorteile lose gekoppelter Kommunikationsverfahren wie bei der Interkomponentenkommunikation üblich genutzt werden. Konfiguration und Verwaltung von Komponenten von Netzwerkagenten können folglich mittels der Erfindung wesentlich einfacher erfolgen. Mittels der verbesserten Kommunikation von Komponenten von Netzwerkagenten kann zugleich und vorteilhaft dasselbe Kommunikationsparadigma verwendet werden, welches auch in der Kommunikation, d. h. im Austausch von Daten, zwischen Netzwerkagenten zunehmend Verwendung findet. Eine Integration des erfindungsgemäß vorgesehenen Kommunikationsparadigmas ist folglich besonders einfach realisierbar.

Bei Publish-Subscribe-Verfahren im Sinne der vorliegenden Erfindung werden Daten derart zwischen Komponenten übertragen, d. h. miteinander ausgetauscht, indem jede einzelne Komponente in der Rolle eines Empfängers von Daten explizit Abonnements dieser Daten einrichtet, um innerhalb dieses Abonnements Daten zu empfangen. Als Sender publiziert eine Komponente innerhalb eines solchen Abonnements Daten.

Die Komponenten erfindungsgemäßer Netzwerkagenten setzen spezifische Teilfunktionalitäten eines Netzwerkagenten um. Diese Komponenten eines Netzwerkagenten interagieren untereinander, d. h. lokal innerhalb des Netzwerkagenten und betreiben folglich eine Intrakomponentenkommunikation. Ferner können solche Komponenten mit Komponenten anderer Netzwerkagenten mittels Interkomponentenkommunikation kommunizieren, um Arbeitsaufgaben, die an den Netzwerkagenten als Ganzes gestellt werden, auszuführen. Eine Komponente des erfindungsgemäßen Netzwerkagenten kann folglich von Intrakomponentenkommunikation, von Interkomponentenkommunikation oder von beiden Kommunikationsarten kombiniert Gebrauch machen.

Ein mögliche Ausführungsform eines Multiagentennetzwerks mit solchen erfindungsgemäßen Netzwerkagenten ist ein dezentral organisiertes Mikrologistiksystem, in dem Transportaufträge zwischen, insbesondere boden- und luftgebundenen, autonomen fahrerlosen Transporteinheiten verhandelt und ausgeführt werden. Jede Transporteinheit bildet einen Netzwerkagenten, welcher mehrere Komponenten umfasst, welche jeweils für eine Erstellung eines Angebots zu einem eingehenden Transportauftrag, sowie für eine Berechnung eines Arbeitsaufwands zur Ausführung des Transportauftrags sowie für eine Verwaltung und eine eigentliche Ausführung eines Transportauftrags zuständig sind. Diese Komponenten des Netzwerkagenten müssen miteinander interagieren, d. h. Daten austauschen, insbesondere muss die Komponente zur Angebotserstellung bei der Komponente zur Arbeitsaufwandsberechnung und bei der Komponente zur Verwaltung des Transportauftrags Daten anfragen, um ein Angebot erstellen und abgeben zu können.

Die Komponente zur Erstellung eines Angebots nimmt hier nicht nur die Rolle einer Komponente zur Intrakommunikation ein, sondern auch einer Komponente zur Interkommunikation, über die Anfragen für Transportaufträge empfangen und Angebote für diese abgegeben werden. Dabei erfolgt die Interkommunikation zu anderen Netzwerkagenten des Multiagentennetzwerks, welche ebenfalls als fahrerlose Transporteinheiten realisiert sind.

Ähnliche Anwendungen erfindungsgemäßer Netzwerkagenten bestehen bei Energiemanagementsystemen. Hier interagieren lokale unterschiedliche Systeme miteinander im Sinne eines lokalen Energiemanagements, insbesondere für ein Gebäude, vorzugsweise ein Haus, oder für ein Betriebsgelände. Gleichzeitig interagiert das lokale Energiesystem übergeordnet mit anderen Energiesystemen, die über eine Energieverteilnetz verbunden sind, insbesondere ein Energieverteilnetz einer Region oder eines Straßenzugs oder einer Kommune, etwa einer Stadt. Ein solches Energiemanagement erfordert ein Kommunikationsmanagement in diesen komplexen, verteilten Systemen. Ein solches Kommunikationsmanagement kann mittels der erfindungsgemäßen Netzwerkagenten leicht realisiert werden.

Bevorzugt sind bei dem erfindungsgemäßen Netzwerkagenten die zwei oder mehr Komponenten zur Subskription von Publish-Subscribe-Nachrichten mittels des Interaktionsmoduls ausgebildet, wobei jede der Komponenten und/oder das Interaktionsmodul zum Empfang oder zum Nichtempfang von Publish-Subscribe-Nachrichten abhängig davon ausgebildet ist, ob diese Komponente die jeweiligen Publish-Subscribe-Nachrichten selbst veröffentlicht hat und/oder ob eine der zwei oder mehr Komponenten des Netzwerkagenten die jeweiligen Publish-Subscribe-Nachrichten veröffentlicht hat und/oder ob eine Komponente eines anderen Netzwerkagenten die Publish-Subscribe-Nachricht veröffentlicht hat. In dieser Weiterbildung der Erfindung können Interaktionsmodule leicht insbesondere solche Publish-Subscribe-Nachrichten ausblenden, die sie selbst publiziert haben. Ferner benötigen einige Komponenten zumindest zeitweise keine Daten von weiteren Komponenten desselben Netzwerkagenten. In dieser Weiterbildung können daher solche Publish-Subscribe-Nachrichten leicht ausgeblendet, d. h. nicht empfangen, werden. Andere Komponenten erfordern gerade nur solche Daten, welche von weiteren Komponenten desselben Netzwerkagenten publiziert werden. Auch solche Publish-Subscribe-Nachrichten lassen sich in dieser Weiterbildung der Erfindung leicht ausfiltern. Andere Komponenten wiederum erfordern kombiniert Daten sowohl von Komponenten desselben Netzwerkagenten als auch von Komponenten weiterer Netzwerkagenten. Dies lässt sich mit der vorgenannten Weiterbildung der Erfindung leicht bewerkstelligen.

Bei dem Netzwerkagenten gemäß der Erfindung sind bevorzugt die zwei oder mehr Komponenten zur Veröffentlichung von Publish-Subscribe-Nachrichten ausgebildet. In dieser Weiterbildung der Erfindung können beide Komponenten des Netzwerkagenten vorteilhaft Datenquellen bilden.

Bei einer vorteilhaften Weiterbildung des erfindungsgemäßen Netzwerkagenten ist das Interaktionsmodul ausgebildet, Publish-Subscribe-Nachrichten einer oder mehrerer Komponenten zusätzlich oder ausschließlich weiteren mit dem Netzwerkagenten signalverbundenen Netzwerkagenten, insbesondere erfindungsgemäßen Netzwerkagenten wie oben beschrieben, zu übertragen. In dieser Weiterbildung der Erfindung ist daher nicht allein eine Intrakomponentenkommunikation mittels Publish-Subscribe-Nachrichten möglich, sondern mittels desselben Kommunikationsparadigmas ist zugleich auch eine Interkomponentenkommunikation realisierbar. Bei dem Netzwerkagenten dieser Weiterbildung können daher Interkomponentenkommunikation und Intrakomponentenkommunikation mittels derselben Kommunikationsprotokolle und somit besonders einfach wartbar und effizient einrichtbar ermöglicht werden. Zudem muss zwischen Interkommunikation und Intrakomponentenkommunikation nicht eigens getrennt werden, sondern Kommunikation kann sowohl unter Komponenten desselben Netzwerkagenten als auch zwischen Komponenten unterschiedlicher Netzwerkagenten auf dieselbe Weise erfolgen. Besonders bevorzugt wird die Kommunikation von Interkomponentenkommunikation und Intrakomponentenkommunikation abstrahiert, d. h. für Daten kann es in bestimmten Anwendungsfällen irrelevant sein, ob miteinander kommunizierende Komponenten aktuell zu demselben Netzwerkagenten gehören oder nicht.

Bei dem erfindungsgemäßen Netzwerkagenten ist das Interaktionsmodul vorzugsweise ausgebildet, Publish-Subscribe-Nachrichten weiterer Netzwerkagenten, insbesondere weiterer erfindungsgemäßer Netzwerkagenten wie oben beschrieben oder Komponenten weiterer erfindungsgemäßer Netzwerkagenten wie oben beschrieben, zu empfangen und einer oder mehrerer der Komponenten desjenigen Netzwerkagenten, zu welchem das Interaktionsmodul gehört, zu übermitteln. Mittels der vorgenannten Weiterbildung der Erfindung fungiert das Interaktionsmodul folglich als Gateway zwischen den Komponenten und weiteren Netzwerkagenten, also als Gateway zwischen einer systemweiten und einer lokalen Kommunikation.

Bei dem Netzwerkagenten gemäß einer bevorzugten Weiterbildung der Erfindung ist der Netzwerkagent, insbesondere das Interaktionsmodul, eingerichtet, Publish-Subscribe-Nachrichten danach zu filtern, ob die Publish-Subscribe-Nachrichten von einer oder mehreren Komponenten des Netzwerkagenten, zu welchem das Interaktionsmodul gehört, stammen. Auf diese Weise kann mittels des Interaktionsmoduls oder mittels des Netzwerkagenten die Kommunikation auf Komponenten ein und desselben Netzwerkagenten beschränkt werden oder es kann allein Kommunikation zwischen verschiedenen Netzwerkagenten zugelassen werden oder es kann eine kombinierte Kommunikation, d. h. Kommunikation von Modulen desselben Netzwerkagenten und zugleich Kommunikation dieser Module mit Modulen weiterer Netzwerkagenten zugelassen werden.

Vorzugsweise sind bei dem erfindungsgemäßen Netzwerkagenten die zwei oder mehr Komponenten miteinander räumlichkörperlich verbunden, insbesondere aneinander angeordnet, vorzugsweise angebunden, oder jeweils an einem einstückigen Teil des Netzwerkagenten angeordnet oder angebunden. So können die Module eines Netzwerkagenten vorzugsweise an ein und derselben Vorrichtung angeordnet sein, etwa einem Industrieroboter. In einer besonders bevorzugten Weiterbildung der Erfindung ist der Netzwerkagent mit den zwei oder mehr Komponenten einstückig ausgebildet.

Der erfindungsgemäße Netzwerkagent ist bevorzugt ein mobiler Netzagent, insbesondere mobil relativ zu weiteren Netzwerkagenten eines gemeinsamen Agentennetzwerks oder zu einer Infrastruktur, etwa einer Netzwerkadministrationseinrichtung, des Agentennetzwerks. Vorzugsweise sind solche mobilen Netzwerkagenten Transporteinheiten oder mobile Industrieroboter, insbesondere Fertigungsroboter.

Bei dem Netzwerkagenten gemäß der Erfindung sind die zwei oder mehr Komponenten zweckmäßig ausgebildet, mittels der Publish-Subscribe-Nachrichten Daten, insbesondere der zwei oder mehr Komponenten, zu synchronisieren. So können mittels der Publish-Subscribe-Nachrichten insbesondere Synchronisationsdaten zwischen den Komponenten ausgetauscht werden.

Bei dem erfindungsgemäßen Netzwerkagenten sind die zwei oder mehr Komponenten vorzugsweise ausgebildet, mittels der Publish-Subscribe-Nachrichten Daten, vorzugsweise der zwei oder mehr Komponenten, zu archivieren und/oder persistieren. In dieser Weiterbildung des erfindungsgemäßen Netzwerkagenten können mittels der Publish-Subscribe-Nachrichten insbesondere Persistenz- oder Archivdaten zwischen den Komponenten ausgetauscht werden.

Bei dem erfindungsgemäßen Verfahren zum Datenaustausch zwischen zwei oder mehr Komponenten eines Netzwerkagenten, erfolgt der Datenaustausch zwischen den zwei oder mehr Komponenten mittels Publish-Subscribe-Nachrichten.

Mittels des erfindungsgemäßen Verfahrens lassen sich die gleichen Vorteile erzielen wie bereits zum erfindungsgemäßen Netzwerkagenten erläutert.

Vorteilhaft werden in einer bevorzugten Weiterbildung des erfindungsgemäßen Verfahrens zum Datenaustausch mittels der Publish-Subscribe-Nachrichten Daten zumindest einer Komponente, vorzugsweise der zumindest zwei oder mehr Komponenten des Netzwerkagenten miteinander, synchronisiert. Zweckmäßig werden in dieser Weiterbildung der Erfindung Publish-Subscribe-Nachrichten in Gestalt von Synchronisationsdaten ausgetauscht.

Geeigneterweise werden bei dem erfindungsgemäßen Verfahren zum Datenaustausch mittels der Publish-Subscribe-Nachrichten Daten zumindest einer der Komponenten, vorzugsweise Daten der zumindest zwei oder mehr Komponenten, des Netzwerkagenten miteinander, archiviert und/oder persistiert. Vorzugsweise werden in dieser Weiterbildung der Erfindung Publish-Subscribe-Nachrichten in Gestalt von Archiv- oder Persistenzdaten ausgetauscht.

Das erfindungsgemäße Multiagentennetzwerk weist mindestens einen ersten und einen zweiten erfindungsgemäßen Netzwerkagenten wie vorhergehend beschrieben auf, wobei zumindest eine, vorzugsweise sämtliche, der mindestens zwei oder mehr Komponenten des ersten Netzwerkagenten sowie zumindest eine, vorzugsweise sämtliche, der mindestens zwei oder mehr Komponenten des zweiten Netzwerkagenten ausgebildet sind, mittels Publish-Subscribe-Nachrichten Daten miteinander auszutauschen.

Das erfindungsgemäße Netzwerk ist ein Fertigungs- und/oder Bearbeitungs- und/oder Logistik- und/oder Wartungsnetzwerk und/oder Internet-der-Dinge-Netzwerk. Gerade im industriellen Umfeld bei den vorgenannten erfindungsgemäßen Netzwerken sind eine Vielzahl von Netzwerkagenten mit mehreren Komponenten einzurichten und flexibel zu verwalten, sodass sich die oben beschriebenen Vorteile der Erfindung geeignet skalieren.

Nachfolgend wird die Erfindung anhand eines in der Zeichnung dargestellten Ausführungsbeispiels näher erläutert.

Die einzige Zeichnungsfigur 1 zeigt ein Multiagentennetzwerk mit mehreren Netzwerkagenten schematisch in einer Prinzipskizze.

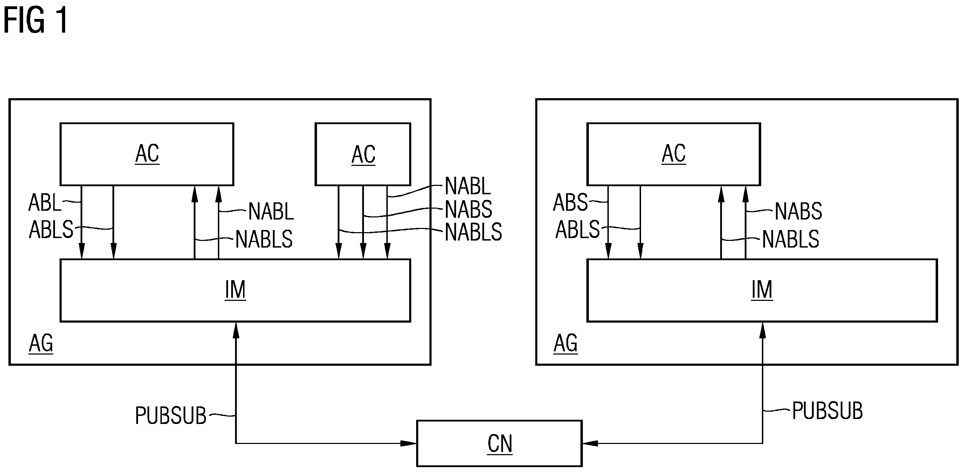

Das in Fig. 1 dargestellte Multiagentennetzwerk CN weist mehrere Netzwerkagenten AG auf, welche miteinander signalverbunden sind.

Dabei sind die mehreren Netzwerkagenten AG des Multiagentennetzwerks CN miteinander flexibel mittels eines zentralen Publikations-/Abonnementdienst PUBSUB miteinander signalverbunden. Jeder Netzwerkagent AG umfasst ein oder mehrere Agentenkomponenten AC sowie ein Interaktionsmodul IM. Mittels des Interaktionsmoduls IM können die Agentenkomponenten AC eines jeweiligen Netzwerkagenten AG lokale Abonnements ABL einrichten. D. h. die Agentenkomponenten AC können Abonnements ABL von Publish-Subscribe-Nachrichten NABL des lokalen Abonnements ABL von Agentenkomponenten desselben Netzwerkagenten AG, subskribieren, d. h. abonnieren. Zudem können Agentenkomponenten AC systemweite Abonnements ABS einrichten. Mittels systemweiter Abonnements ABS können Netzwerkagenten AG Publish-Subscribe-Nachrichten NABS des systemweiten Abonnements ABS solcher Agentenkomponenten AC abonnieren, welche nicht zum gleichen Netzwerkagenten AC gehören. Zudem können einige der Netzwerkagenten AG kombinierte Abonnements ABLS einrichten, welche Publish-Subscribe-Nachrichten NABLS abonnieren, die sowohl von Agentenkomponenten AC desselben Netzwerkagenten AG als auch von Agentenkomponenten AC von anderen Netzwerkagenten AG publiziert sind.

Publish-Subscribe-Nachrichten NABL eines lokalen Abonnements ABL, welche von einer lokalen, d. h. zum selben Netzwerkagenten AG gehörenden, Agentenkomponente AC publiziert sind, können im dargestellten Ausführungsbeispiel vom Interaktionsmodul IM des Netzwerkagenten an alle lokalen, d. h. zum selben Netzwerkagenten AG gehörenden, Agentenkomponenten AC weitergeleitet werden, welche lokale Abonnements ABL zu diesen Publish-Subscribe-Nachrichten NABL eingerichtet haben.

Publish-Subscribe-Nachrichten NABS eines systemweiten Abonnements ABS werden jeweils von der publizierenden Agentenkomponente AC dem Interaktionsmodul IM des Netzwerkagenten AG, zu welchem die jeweils publizierende Agentenkomponente AC gehört, über das Multiagentennetzwerk CN an alle weiteren Interaktionsmodule IM derjenigen Netzwerkagenten AG übermittelt, zu welchen die publizierende Agentenkomponente AC nicht gehört. Diese weiteren Interaktionsmodule IM übertragen dann jeweils die eingehende Publish-Subscribe-Nachricht NABS des systemweiten Abonnements ABS an alle solchen Agentenkomponenten AC desjenigen Netzwerkagenten AG, zu welchen jeweils das Interaktionsmodul IM gehört, und welche das systemweite Abonnement NABS eingerichtet haben.

Publish-Subscribe-Nachrichten NABLS eines kombinierten Abonnements ABLS, die von einer lokalen Agentenkomponente AC publiziert werden, werden vom lokalen Interaktionsmodul IM, also vom Interaktionsmodul IM desselben Netzwerkagenten AG, zum einen an alle Agentenkomponenten AC desselben Netzwerkagenten AG weitergeleitet, welche darauf kombinierte Abonnements ABLS eingerichtet haben. Zum anderen leitet dieses lokale Interaktionsmodul IM die Publish-Subscribe-Nachrichten NABLS des kombinierten Abonnements ABLS über das Multiagentennetzwerk CN an alle weiteren, entfernten, Interaktionsmodule IM, also an alle solchen Interaktionsmodule IM, welche nicht zum selben Netzwerkagenten AG, zu welchem die publizierenden Agentenkomponente AC gehört, vermittelt, sofern in den jeweiligen Interaktionsmodulen IM kombinierte Abonnements ABLS auf dem systemweiten Publikations-/Abonnementdienst PUBSUB eingerichtet sind. Diese weiteren, entfernten, Interaktionsmodule IM übertragen dann die eingehenden Publish-Subscribe-Nachrichten NABLS an alle solchen Agentenkomponenten AC, welche mit dem jeweiligen Interaktionsmodul IM zum selben Netzwerkagenten AG gehören und das kombinierte Abonnement ABLS eingerichtet haben.

In einem weiteren, nicht eigens dargestellten Ausführungsbeispiel, welches im Übrigen dem dargestellten Ausführungsbeispiel entspricht, übermittelt das Interaktionsmodul IM einer bestimmten Agentenkomponente AC jeweils solche Publish-Subscribe-Nachrichten NABL oder NABS oder NABLS eines lokalen ABL oder systemweiten ABS oder kombinierten Abonnements ABLS nicht, welche von der dieser bestimmten Agentenkomponente AC selbst innerhalb dieses lokalen ABL oder systemweiten ABS oder kombinierten Abonnements ABLS publiziert worden sind. Im dargestellten Ausführungsbeispiel hingegen werden die jeweilige Publish-Subscribe-Nachricht NABL oder NABS oder NABLS eines lokalen ABL oder systemweiten ABS oder kombinierten Abonnements NABLS vom Interaktionsmodul IM auch solchen Agentenkomponenten AC übermittelt, welche die Publish-Subscribe-Nachrichten NABL oder NABS oder NABLS publiziert haben.

Grundsätzlich kann die Übermittlung selbst publizierter Publish-Subscribe-Nachrichten NABL, NABS, NABLS durch das jeweilige Interaktionsmodul IM an diejenigen abonnierenden Agentenkomponenten AC, welche zum selben Netzwerkagenten gehört wie das Interaktionsmodul IM, global für alle Abonnements der Agentenkomponenten AC oder für jedes Abonnement der Agentenkomponenten AC individuell konfiguriert sein.

In einem weiteren Ausführungsbeispiel kann das Interaktionsmoduls IM eingerichtet sein, Abonnements regelbasiert oder mittels einer Reichweitenkonfiguration als lokale Abonnements ABL, als systemweite Abonnements ABS oder als kombinierte Abonnements ABLS festzulegen. Ferner kann das Interaktionsmodul IM ausgebildet sein, diese Reichweitenkonfiguration statisch und/oder zur Laufzeit festzulegen und/oder zu verändern.

In einem weiteren, nicht eigens dargestellten Ausführungsbeispiel, welches im Übrigen dem dargestellten Ausführungsbeispiel entspricht, kommen für lokale Publish-Subscribe-Nachrichten einerseits und für systemweite Publish-Subscribe-Nachrichten andererseits unterschiedliche Kommunikationstechnologien zum Einsatz.

In einem weiteren, nicht eigens dargestellten Ausführungsbeispiel, welches im Übrigen dem dargestellten Ausführungsbeispiel entspricht, werden die lokalen Publish-Subscribe-Nachrichten NABL eines lokalen Abonnements ABL genutzt, einen Zustand einer lokalen Agentenkomponente zu synchronisieren.

Beispielsweise wird ein Zustand x (nicht in der Zeichnung dargestellt) einer lokalen Agentenkomponente A-1 (nicht in der Zeichnung dargestellt) auf den Wert 2 aktualisiert. Daraufhin empfangen alle übrigen lokalen Agentenkomponenten A-2 (nicht in der Zeichnung dargestellt), welche zum selben Netzwerkagenten AG wie die lokale Agentenkomponente A-1 gehören und den lokalen Zustand mittels des lokalen Abonnements ABL abonniert haben, eine Nachricht, dass der Zustand x aktualisiert wurde und können dementsprechend Aktionen ausführen oder nicht. Die Aktualisierung des Zustands x kann aber auch ohne entsprechende Nachricht im Hintergrund erfolgen, so dass beim nächsten Zugriff der übrigen lokalen Agentenkomponenten A-2 auf den Zustand x direkt der aktuelle Zustand x zur Verfügung steht. Dazu kann bei den Agentenkomponenten A-1, A-2 jeweils ein Zustandssychronisierungsmechanismus (nicht in der Zeichnung dargestellt) eingerichtet sein, welcher den Zustand x mit allen übrigen Agentenkomponenten A-2, welche diesen Zustand x abonniert haben, abgleicht und diese Agentenkomponenten A-2 benachrichtigt. Vorteilhaft ist hier zusätzlich die Austauschbarkeit des Zustandssychronisierungsmechanismus vorgesehen. Hier können in an sich bekannter Weise beispielsweise verteilte Verfahren wie RAFT (https://en.wikipedia.org/wiki/Raft (algorithm)) und/oder Paxos (https://en.wikipedia.org/wiki/Paxos (computer science)) und/oder andere Verfahren aus dem Fachgebiet der verteilten Datenbanken oder der Blockchain und des Distributed Ledger implementiert sein. Neben verteilten Verfahren ist in weiteren, nicht eigens dargestellten Ausführungsbeispielen auch ein zentrales Management der Zustände in einer dedizierten, singulären Komponente im Gesamtsystem möglich.

Ein solches Verfahren zur Zustandssynchronisierung kann beispielsweise wie folgt über eine einheitliche Abonnementschnittstelle (nicht in der Zeichnung gezeigt) des Interaktionsmoduls IM implementiert sein: Eine Agentenkomponente AC publiziert einen aktualisierten Zustand z mit dem Wert v, beispielhaft als Attribut-Werte Paar (z, v) ausgeprägt, in einem Zustandssynchronisierungsabonnement. Der zugrundeliegende Zustandssychronisierungsmechanismus, mittels welchem das Zustandssynchronisierungsabonnement einrichtet ist, empfängt und synchronisiert die Änderungen des Zustands z über alle beteiligten Agentenkomponenten AC hinweg, welche das Zustandssynchronisierungsabonnement eingerichtet haben. Das Zustandssynchronisierungsabonnement kann ein lokales Abonnement ABL oder ein systemweites Abonnement ABS oder ein kombiniertes Abonnement ABLS sein.

Auf eine entsprechende Weise kann mittels des Interaktionsmoduls IM eine lokale oder systemweite Datenpersistierung realisiert werden: So kann eine Agentenkomponente AC ein zu persistierendes Datum an eine Persistierungskomponente P (in der Zeichnung nicht dargestellt) übermitteln, welche zu persistierende Daten mittels eines Persistierungsabonnements abonniert hat und jedes zu persistierende Datum bei Empfang persistiert. Alle anderen Agentenkomponenten AC, welche an Änderungen an zu persistierenden Daten interessiert sind und entsprechend das Persistierungsabonnement abgeschlossen haben, bekommen eine Benachrichtigung, dass das zu persistierende Datum persistiert wurde. Diese anderen Agentenkomponenten können aus der Benachrichtigung resultierende Aktionen ausführen oder nicht. Ein solches Interaktionsmodul IM kann sowohl zur Intrakomponentendatenpersistierung, d. h. zur Persistierung von Agentenkomponenten AC desselben Netzwerkagenten AG ausgebildet sein als auch alternativ oder zusätzlich zur Interkomponentendatenpersistierung ausgebildet sein, bei welchen Agentenkomponenten AC verschiedener Netzwerkagenten AG miteinander eine gemeinsame Datenpersistierung vornehmen. In diesem Ausführungsbeispiel ist die Austauschbarkeit des eigentlichen Persistierungsmechanismus möglich, wozu beliebige nichtflüchtige Speichermedien, beispielsweise Dateisysteme oder Datenbanken, eingesetzt werden können, die lokal, zentral oder dezentral vorhanden sind.

Ein solches Verfahren zur Datenpersistierung kann beispielsweise wie folgt über eine einheitliche Abonnementschnittstelle des Interaktionsmoduls IM realisiert sein: Eine Agentenkomponente AC publiziert ein zu persistierendes Datum p (nicht in der Zeichnung dargestellt) mit dem Wert v, vorteilhaft als Attribut-Wertepaar (p, v) ausgeprägt, auf einem Persistierungsabonnement, welches die Persistierungskomponente P (nicht in der Zeichnung dargestellt) eingerichtet hat. Die Persistierungskomponente P persistiert alle auf diesem Persistierungsabonnement empfangenen Attribut-Wertepaare (p, v) und publiziert diese gleichzeitig auf dem Persistierungsabonnement, über das beliebige andere Agentenkomponenten, welche dieses Persistierungsabonnement eingerichtet haben, über Änderungen an dem Attribut-Wertepaar (p, v) benachrichtigt werden.

Die Netzwerkagenten AG der vorgenannten Ausführungsbeispiele bilden beispielsweise autonome Logistikfahrzeuge, welche in einem Multiagentennetzwerk CN in Form eines Logistiknetzwerks miteinander signalverbunden sind. Die Netzwerkagenten AG übernehmen dabei Transportaufgaben und tauschen miteinander Daten in Form von geplanten Fahrwegen und damit zu erledigenden Transportaufgaben aus. Zudem sind die Netzwerkagenten elektrisch betrieben und laden sich selbständig an elektrischen Ladestationen elektrisch auf. Zur Ladeplanung tauscht eine elektrische Versorgungskomponente als Agentenkomponente AC Daten mit einer Fahrtwegplanungskomponente mittels lokaler Publish-Subscribe-Nachrichten NABL aus. Die Netzwerkagenten synchronisieren fortlaufend Daten in Form einer Aufgabenliste mit Transportaufgaben. Zudem speichern die Netzwerkagenten ihre Arbeitswege in Form zu persistierender Daten P als Logfile.

Alternativ kann es sich in weiteren Ausführungsbeispielen bei den Netzwerkagenten um Fertigungsmaschinen handeln, welche Komponenten zur Ressourcenplanung sowie Komponenten zur Aufgabenplanung aufweisen, welche sowohl lokal innerhalb der Fertigungsmaschine miteinander mittels lokaler Abonnements ABL in Kontakt stehen als auch systemübergreifend Wartungsinformationen mittels systemweiter Publish-Subscribe-Nachrichten NABS synchronisieren und Produktionsdaten in Form zu persistierender Daten archivieren. Zudem werden Ressourcenplanungen sowohl lokal als auch systemübergreifend mittels kombinierter Abonnements ABLS kommuniziert.

## Patentansprüche

1. Netzwerkagent zur Einbindung in ein Multiagentennetzwerk (CN), wobei der Netzwerkagent (AG) zwei oder mehr Komponenten (AC) sowie ein Interaktionsmodul (IM) aufweist, wobei das Interaktionsmodul (IM) mit den zwei oder mehr Komponenten (AC) signalverbunden und eingerichtet ist, Publish-Subscribe-Nachrichten (NABL, NABS, NABLS) zwischen den zwei oder mehr Komponenten (AC) zu übertragen.

2. Netzwerkagent nach einem der vorhergehenden Ansprüche, bei welchem die zwei oder mehr Komponenten (AC) zur Subskription von Publish-Subscribe-Nachrichten (NABL, NABS, NABLS) mittels des Interaktionsmoduls (IM) ausgebildet sind, wobei jede der Komponenten (AC) jeweils zum Empfang oder zum Nichtempfang von Publish-Subscribe-Nachrichten (NABL, NABS, NABLS) abhängig davon ausgebildet sind, ob die jeweilige Komponente (AC) die jeweiligen Publish-Subscribe-Nachrichten (NABL, NABS, NABLS) selbst veröffentlicht hat und/oder ob eine der zwei oder mehr Komponenten (AC) desselben Netzwerkagenten (AG) die jeweiligen Publish-Subscribe-Nachrichten (NABL, NABS, NABLS) veröffentlicht hat und/oder ob eine oder mehrere Komponenten (AC) anderer Netzwerkagenten (AG) die Publish-Subscribe-Nachricht (NABL, NABS, NABLS) veröffentlicht hat.

3. Netzwerkagent nach einem der vorhergehenden Ansprüche, bei welchem die zwei oder mehr Komponenten (AC) zur Veröffentlichung von Publish-Subscribe-Nachrichten (NABL, NABS, NABLS) ausgebildet sind.

4. Netzwerkagent nach einem der vorhergehenden Ansprüche, bei welchem das Interaktionsmodul (IM) ausgebildet ist, Publish-Subscribe-Nachrichten (NABL, NABS, NABLS) einer oder mehrerer Komponenten (AC) zusätzlich oder ausschließlich an weitere mit dem Netzwerkagenten (AG) signalverbundenen Netzwerkagenten (AG), insbesondere Netzwerkagenten (AG) nach einem der vorhergehenden Ansprüche oder Komponenten (AC) von Netzwerkagenten (AG) nach einem der vorhergehenden Ansprüche, zu übertragen.

5. Netzwerkagent nach einem der vorhergehenden Ansprüche, bei welchem das Interaktionsmodul (IM) ausgebildet ist, Publish-Subscribe-Nachrichten (NABL, NABS, NABLS) weiterer Netzwerkagenten (AG), insbesondere weiterer Netzwerkagenten (AG) nach einem der vorhergehenden Ansprüche oder von Komponenten weiterer Netzwerkagenten (AG) nach einem der vorhergehenden Ansprüche, zu empfangen und einer oder mehreren der Komponenten (AC) zu übermitteln.

6. Netzwerkagent nach einem der vorhergehenden Ansprüche, bei welchem der Netzwerkagent (AG), insbesondere das Interaktionsmodul (IM), eingerichtet ist, Publish-Subscribe-Nachrichten (NABL, NABS, NABLS) danach zu filtern, ob die Publish-Subscribe-Nachrichten (NABL, NABS, NABLS) von einer oder mehreren Komponenten (AC) des Netzwerkagenten (AG) entstammen.

7. Netzwerkagent nach einem der vorhergehenden Ansprüche, bei welchem die zwei oder mehr Komponenten (AC) miteinander räumlich und/oder körperlich verbunden sind, insbesondere aneinander oder jeweils an einem einstückigen Teil des Netzwerkagenten (AG) angeordnet, insbesondere angebunden, sind.

8. Netzwerkagent nach einem der vorhergehenden Ansprüche, welcher ein mobiler Netzagent (AG) ist, insbesondere mobil relativ zu weiteren Netzwerkagenten (AG) eines gemeinsamen Multiagentennetzwerks (CN) oder zu einer Infrastruktur, etwa einer Netzwerkadministrationseinrichtung, des Multiagentennetzwerks (CN).

9. Netzwerkagent nach einem der vorhergehenden Ansprüche, bei welchem die zwei oder mehr Komponenten (AC) ausgebildet sind, mittels der Publish-Subscribe-Nachrichten (NABL, NABS, NABLS) Daten zu synchronisieren.

10. Netzwerkagent nach einem der vorhergehenden Ansprüche, bei welchem die zwei oder mehr Komponenten (AC) ausgebildet sind, mittels der Publish-Subscribe-Nachrichten (NABL, NABS, NABLS) zu archivieren und/oder persistieren.

11. Verfahren zum Datenaustausch zwischen Komponenten (AC) eines Netzwerkagenten (CN) nach einem der vorhergehenden Ansprüche, bei welchem der Datenaustausch zwischen den Komponenten mittels Publish-Subscribe-Nachrichten (NABL, NABS, NABLS) erfolgt.

12. Verfahren zum Datenaustausch nach einem der vorhergehenden Ansprüche, bei welchem mittels der Publish-Subscribe-Nachrichten (NABL, NABS, NABLS) Daten zumindest einer der Komponenten (AC), vorzugsweise der zumindest zwei oder mehr Komponenten (AC) des Netzwerkagenten (AG) miteinander, synchronisiert werden.

13. Verfahren zum Datenaustausch nach einem der vorhergehenden Ansprüche, bei welchem mittels der Publish-Subscribe-Nachrichten (NABL, NABS, NABLS) Daten zumindest einer der Komponenten (AC), vorzugsweise der zumindest zwei oder mehr Komponenten (AC) des Netzwerkagenten (AG) miteinander, archiviert und/oder persistiert werden.

14. Multiagentennetzwerk mit mindestens einem ersten und einem zweiten Netzwerkagenten (AG) nach einem der vorhergehenden Ansprüche, bei welchem zumindest eine, vorzugsweise sämtliche, der mindestens zwei oder mehr Komponenten (AC) des ersten Netzwerkagenten (AG) sowie zumindest eine, vorzugsweise sämtliche, der mindestens zwei oder mehr Komponenten (AC) des zweiten Netzwerkagenten (AG) ausgebildet sind, mittels Publish-Subscribe-Nachrichten (NABL, NABS, NABLS) Daten miteinander austauschen.

15. Multiagentennetzwerk nach einem der vorhergehenden Ansprüche, welches ein Fertigungs- und/oder Bearbeitungs- und/oder Logistik- und/oder Wartungsnetzwerk und/oder Internet-der-Dinge-Netzwerk ist.
